**Europäisches Patentamt**

**European Patent Office**

**Office européen des brevets**

(19)

(11) Numéro de publication : **0 248 741 B1**

(12) **FASCICULE DE BREVET EUROPEEN**

(45) Date de publication du fascicule du brevet :
27.02.91 Bulletin 91/09

(51) Int. Cl.⁵ : **A01K 79/00**

(21) Numéro de dépôt : 87401284.2

(22) Date de dépôt : 05.06.87

(54) **Caisse de stockage pour lignes type palangres pélagiques.**

(30) Priorité : 05.06.86 FR 8608314

(43) Date de publication de la demande :
09.12.87 Bulletin 87/50

(45) Mention de la délivrance du brevet :
27.02.91 Bulletin 91/09

(84) Etats contractants désignés :
AT BE CH DE ES FR GB GR IT LI LU NL SE

(56) Documents cités :
DE-A- 1 817 621
FR-A- 2 551 319
GB-A- 2 106 361

(56) Documents cités :
GB-A- 2 124 862
US-A- 2 599 113
US-A- 2 670 565
US-A- 4 354 323

(73) Titulaire : **Michon, Dominique**
**23 rue du Pont du Chat**
**F-44490 Le Croisic (FR)**

(72) Inventeur : **Michon, Dominique**
**23 rue du Pont du Chat**
**F-44490 Le Croisic (FR)**

(74) Mandataire : **Tanguy, Gilbert André et al**
**c/o Harlé-Phélip 21, rue de la Rochefoucauld**
**F-75009 Paris (FR)**

EP 0 248 741 B1

## Description

L'invention est relative à la construction de caisses transportables de stockage et d'arrimage de lignes de pêche du type palangres de fond ou palangres pélagiques en vue de leur réutilisation ; elle concerne également un procédé de préparation de ces lignes avant filage.

Pour faciliter la compréhension, on donne ci-après une définition des termes particuliers utilisés dans la description et les revendications. Par "halage" on désigne l'action de remonter la ligne du fond de la mer ; par "filage" on désigne l'opération de mise à l'eau de la ligne ; par "boëttage" on désigne l'action de mettre un appât sur un hameçon ; un "appât" est constitué de sardines, maquereaux, lançons etc... ; par "lest" on désigne le ou les poids entraînant la ligne au fond de la mer ; par "avançon" on désigne le bras cassant reliant un émerillon à un hameçon ; par "cordeau" on désigne un bras résistant reliant un émerillon à un lest ou à un flotteur.

Pour ce type de pêche avec lignes palangres pélagiques, on rencontre de nombreuses difficultés à différents moments de la pêche : lors de la manipulation de ces lignes, lors de la préparation de ces lignes à bord des bateaux en vue de leur filage, lors de la mise en place de l'appât sur les hameçons, lors du halage.

Il est courant de haler la ligne en vrac sans rangement particulier dans la caisse de stockage, provoquant le plus souvent un grand emmêlement ; lorsque la campagne de pêche est terminée, toute la ligne est reprise manuellement et installée dans une caisse en vue de son filage. Lors du filage, on met au passage les appâts sur les hameçons, cette opération est très longue et aussi très dangereuse. De la même façon, les lests et flotteurs sont accrochés à la ligne une fois le boëttage réalisé. Toutes ces opérations demandent un personnel embarqué compétent et nombreux.

On connaît certains dispositifs qui utilisent des moyens de stockage des hameçons dans le but principalement, d'éviter l'emmêlement de la ligne tant au halage qu'au filage.

Un dispositif de ce genre est plus particulièrement décrit dans le document US-A-2.670.565. Ce document présente une caisse de stockage comportant une ouverture frontale de halage et de filage de la ligne, située entre deux côtés latéraux de la caisse dont l'un au moins est équipé, à sa bordure supérieure, d'un ratelier muni d'un rail sur lequel sont rangés les hameçons.

En cas de manipulation de ces hameçons, l'opérateur peut accidentellement les laisser tomber dans la caisse ce qui provoque immanquablement un mêlage de la ligne. De même lors du filage ou encore par mauvais temps, l'hameçon peut se dégager du rail de rangement et tomber dans la caisse.

L'invention a pour but de rendre plus sûres toutes les manipulations de la ligne lors de la pêche maritime, que ce soient les manipulations de l'opérateur pour le boëttage par exemple ou les manipulations de filage et de halage.

La présente invention permet également une meilleure préparation de la ligne en offrant tout d'abord la possibilité de vérifier visuellement l'état des hameçons et d'intervenir sur ceux qui sont défectueux ; puis en offrant la possibilité de préparer immédiatement après halage la même ligne pour un nouveau filage tout en surveillant par exemple le filage d'une autre ligne maîtresse.

L'invention permettant la préparation préalable de la ligne, on obtient, lorsqu'elle est sur le fond, une grande régularité ; lors du filage de la ligne, les lests et flotteurs sont tirés à intervalles réguliers, ce qui n'est guère possible avec les systèmes classiques où l'on accroche ces équipements au fur et à mesure du filage. L'invention permet en fait un meilleur rendement de la ligne grâce à son positionnement précis et régulier sur le fond de la mer.

L'invention permet encore de pouvoir varier, pour une même caisse, très facilement, les dimensions de la ligne, des avançons et même des hameçons.

La caisse de stockage selon l'invention comporte des moyens qui permettent d'éviter toute chute accidentelle des hameçons dans la caisse, lesquels moyens consistent en une fente longitudinale, ménagée entre le ratelier et le côté de la caisse équipé dudit ratelier, ouverte du côté de l'ouverture frontale pour permettre le passage des avançons ; la largeur de cette fente est à cet effet inférieure à l'encombrement du pied de l'hameçon.

Selon une disposition préférentielle de l'invention, la caisse comporte, à sa partie supérieure, un ratelier fixé en porte-à-faux à son extrémité arrière sur un côté de la caisse, lequel ratelier est séparé de la bordure dudit côté de façon à former la fente qui permet le passage des avançons de la ligne.

Selon une autre disposition préférentielle de l'invention, le ratelier est un profilé comportant une rainure longitudinale entre le rail support et le plafond du profilé, la hauteur de ladite rainure est inférieure à deux fois le diamètre de l'hameçon, l'espace interne du profilé permet le logement de l'ardillon et aussi son mouvement pour le dégager dudit ratelier, avant et de façon à permettre l'opération de boëttage.

Toujours selon l'invention, pour éviter toute chute des hameçons dans la caisse de stockage, l'espace entre le côté de la caisse et le ratelier, au niveau de la fente est inférieur à l'encombrement du pied de l'hameçon.

Selon une autre disposition de l'invention, la caisse comporte sur au moins un côté, des structures en forme de tubes, servant au logement et au rangement des lests et flotteurs de la ligne maîtresse.

Selon une disposition préférentielle, ces tubes sont fendus longitudinalement, du côté de la caisse, pour le passage des cordeaux et ils sont disposés, inclinés vers l'arrière, pour immobiliser automatiquement les lests et flotteurs dans leur logement ; ces tubes sont soudés entre eux pour constituer une structure rigide fixée de façon amovible sur le côté de la caisse.

Toujours selon l'invention la caisse comporte sur un côté, en vis à vis du ratelier, au moins un bac destiné aux appâts boëttés. Ce bac comporte des volets mobiles de séparation des différentes couches d'appâts, lesquels volets sont guidés et maintenus au moyen de rainures s'étendant longitudinalement dans le bac.

Toujours selon l'invention, le ratelier comporte, en amont, un guide hameçon monté de façon amovible par un emboîtement dans le profilé constituant ledit ratelier.

Selon une autre disposition de l'invention, la caisse est équipée, pour le filage, d'une rampe constituant une goulotte de sortie et d'accompagnement de la ligne maîtresse munie de ses appâts, de ses flotteurs et de ses lests.

L'invention concerne également le procédé de préparation de lignes type palangres pélagiques stockées dans une caisse selon l'invention. Ce procédé consiste, après halage de la ligne et rangement des hameçons dans le ratelier d'une part, des flotteurs et lests dans leur logement respectif d'autre part, à sortir chaque hameçon dudit ratelier, à le boëtter, et à le positionner après boëttage dans un bac disposé à proximité dudit ratelier.

Selon une disposition préférentielle de l'invention, ce procédé consiste à boëtter le premier hameçon et à poser l'appât dans le bac, puis, prenant chaque hameçon à la suite l'un de l'autre en disposant les appâts par couches, à recouvrir la première couche au moyen d'un volet mobile, à disposer une deuxième couche d'appât puis un autre volet jusqu'au boëttage de l'ensemble des hameçons.

L'invention sera mieux comprise à l'aide de la description suivante et des dessins annexés donnés à titre indicatif, et dans lesquels :
- la figure 1 représente une ligne palangre pélagique sur le fond de la mer avec un bateau en train de filer une telle ligne ;
- la figure 2 est une vue schématique, en perspective d'une caisse de stockage selon l'invention ;
- la figure 3 est une vue de côté de la caisse, munie d'une rampe de filage ;
- la figure 4 est une demi-vue de face, selon 4-4;
- la figure 5 est une vue de dessus montrant une caisse comportant un double équipement.
- les figures 6 et 7 représentent en vue de face et de dessus respectivement, le détail des moyens de mise en place de l'hameçon lors du filage, en amont du ratelier.

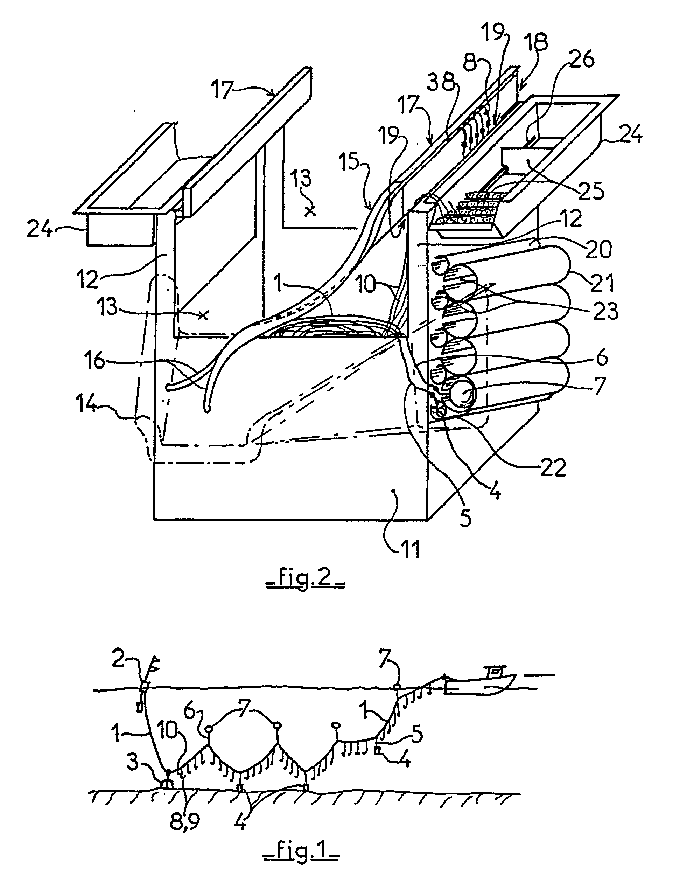

Telle que représentée figure 1, la ligne palangre pélagique est constituée d'une ligne mâitresse 1 maintenue à son extrémité par un pavillon 2, puis, au fond de la mer par un lest 3 et, de part en part, au moyen de lests 4 reliés à la ligne maîtresse 1 par des cordeaux 5. Entre les lests on trouve, reliés par des cordeaux 6 des flotteurs 7. Les hameçons 8 et leurs appâts 9 sont reliés à la ligne maîtresse 1 au moyen des avançons 10.

La ligne se développe sur le fond de la mer au fur et à mesure de l'avancement du bateau ; elle sort d'elle-même de la caisse de stockage décrite ci-après, guidée sur une rampe dont il sera question plus loin également.

La figure 2 représente une caisse de stockage selon l'invention. Cette caisse est constituée d'un coffre parallélépipédique 11 dans lequel est stockée la ligne maîtresse 1. Sur un côté 12, s'étendant verticalement, des moyens appropriés permettent le stockage d'une part des hameçons 8 reliés à la ligne maîtresse 1 par les avançons 10 et, d'autre part, des lests 4 reliés à la ligne maîtresse par les cordeaux 5 et des flotteurs 7 reliés à la ligne maîtresse par les cordeaux 6.

On a représenté, figure 2, une caisse de stockage munie de deux côtés 12 s'étendant verticalement de part et d'autre de l'ouverture 13, laquelle ouverture permet, en particulier, le filage de la ligne guidée au moyen de la rampe 14 représentée en traits mixtes fins. Comme représenté plus loin, cette rampe 14 est amovible et peut se positionner sur l'autre ouverture 13 de la caisse située, figure 2, à l'arrière. La caisse présente ainsi un caractère de symétrie.

La rampe 14 est utilisée pour le filage de la ligne. Le halage de la ligne s'effectue généralement au moyen d'un dispositif vireur et, au fur et à mesure, les hameçons, les lests et les flotteurs sont rangés dans la caisse. Lors de cette opération de halage, la rampe 14 est enlevée ; on utilise, pour les hameçons, un tube de guidage 15, muni à son extrémité avant d'une fourchette 16, pour saisir automatiquement les avançons 10 et guider les hameçons 8 jusque dans un ratelier 17 disposé à la partie supérieure interne du côté 12 de la caisse. L'une des particularités de l'invention, est de stocker les hameçons 8 non pas tournés vers l'intérieur de la caisse mais tournés vers l'extérieur de façon à être accessibles. Pour cela, le ratelier 17 est solidaire du côté 12 de la caisse à son extrémité arrière 18 uniquement, laissant ainsi une fente longitudinale 19, ouverte à l'avant de la caisse, du côté de la face frontale de filage de la caisse pour permettre le passage des avançons 10 de la ligne. Par ailleurs, l'espace entre le ratelier 17 et la bordure supérieure du côté 12 est inférieur à l'encombrement du pied de l'hameçon 8 pour éviter toute chute accidentelle de l'hameçon dans la caisse.

Le tube de guidage 15 est utilisé pour le halage uniquement, il peut être amovible pour ne pas entraver le filage de la ligne.

Les flotteurs 7 et lests 4 sont stockés manuellement dans une structure latérale fixée sur le côté 12 de la caisse ; cette structure est constituée de tubes 20 et 21 respectivement, en nombre suffisant pour recueillir tous ces accessoires. La structure porteuse 22 est de préférence amovible, constituant un équipement complémentaire de la caisse. Les tubes 20 et 21 peuvent avoir des diamètres différents et être assemblés, comme représentés figure 2, soudés l'un à l'autre pour constituer une structure rigide. Les tubes 20 et 21 sont inclinés de l'avant vers l'arrière pour immobiliser automatiquement, par simple gravité, les lests et les flotteurs. Les flotteurs 7 se présentent sous la forme de boules classiques, les lests 4 peuvent être constitués de petits cylindres qui s'emboîtent plus facilement dans les tubes récepteurs 20. Ces tubes 20 et 21 constituant les logements des lests et flotteurs comportent, de préférence, des fentes longitudinales 23, tournées vers le côté 12 pour le passage des cordeaux 5 et 6 des lests 4 et des flotteurs 7, respectivement, de façon à éviter l'emmêlement desdits cordeaux à l'intérieur des tubes. Un simple noeud sur lesdits cordeaux, entre le lest 4 ou le flotteur 7, et leur fixation sur la ligne maîtresse 1, permet, au moment de l'introduction desdits lests et flotteurs, de positionner la majeure partie du cordeau à l'extérieur des tubes, entre ces derniers et le côté 12.

Lorsque, après halage, l'ensemble de la ligne est rangé, c'est-à-dire la ligne maîtresse disposée dans le coffre 11, les hameçons 8 dans le ratelier 17, les lests 4 dans leurs tubes de logement 20 et les flotteurs 7 dans leurs tubes 21, la ligne peut être préparée en vue d'un pouveau filage. La préparation de la ligne consiste, dans un premier temps, à vérifier les hameçons 8, en particulier leur état, puis ensuite à boëtter ces hameçons, c'est-à-dire à prendre des appâts et à les fixer, un par un sur chaque hameçon. Cette opération s'effectue manuellement par un opérateur qui dispose d'un bac 24 s'emboîtant à la partie supérieure du côté 12 de la caisse, en vis à vis du ratelier 17 ; ce bac est disposé latéralement, au-dessus des tubes 20, 21. L'opérateur prend un par un, les hameçons en commençant par ceux disposés à l'entrée de la fente 19 pour piquer l'appât et le déposer dans le bac 24. Ces appâts apparaissent figure 2, disposés en rangées transversales dans le bac 24 et par couches successives, lesquelles couches sont séparées par des volets 25 ancrés dans ledit bac par des rainures latérales de blocage 26 ; ces volets 25 peuvent être plats ou compartimentés.

Lorsque cette préparation de la ligne est terminée, cette dernière est prête à être filée, en plaçant, au niveau de l'ouverture frontale 13 de la caisse, la rampe de guidage 14.

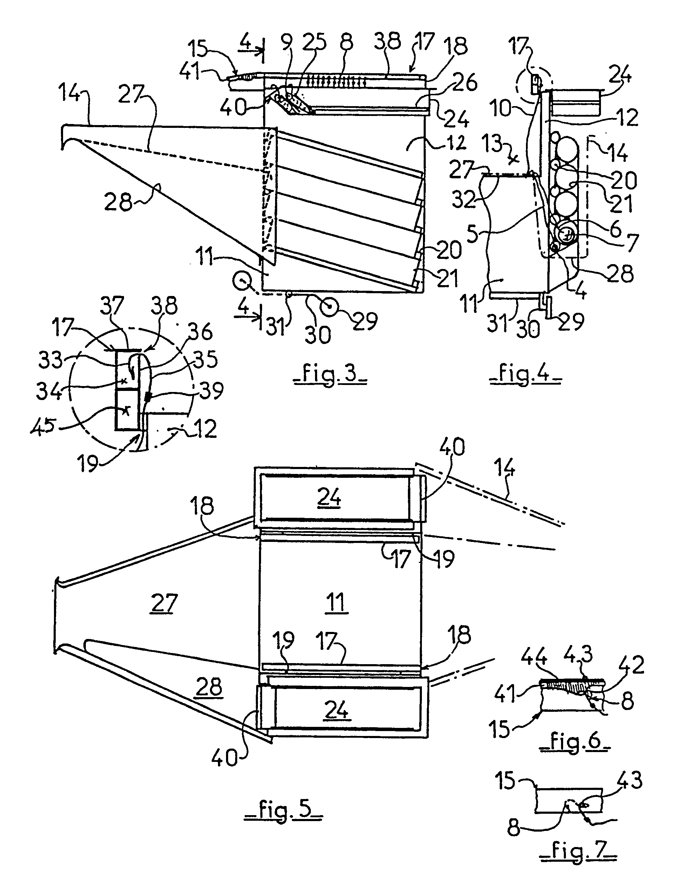

La caisse de stockage apparaît figure 3, en vue latérale ; on distingue le coffre 11 se prolongeant, à la partie supérieure par le côté 12. Sur ce côté du coffre on remarque les tubes 20 et 21 de stockage des lests 4 et flotteurs 7 respectivement ; ces tubes sont disposés de façon inclinée vers l'arrière pour immobiliser par gravité, lesdits lests et flotteurs.

Sur l'avant de la caisse on remarque la rampe de guidage 14 ; cette rampe comporte deux niveaux, un premier niveau 27 qui correspond au guidage de la ligne maîtresse principalement et un deuxième niveau 28 qui correspond au guidage des flotteurs 7, des lests 4, et des appâts 9.

A la partie supérieure du côté 12, on remarque le ratelier 17 de stockage des hameçons 8 ; ce ratelier s'étend sur toute la largeur de la caisse. A l'avant de ce ratelier 17 on a représenté, une portion du tube de guidage 15 des hameçons lors du halage de la ligne et, figures 6 et 7, le détail des moyens de mise en place de l'hameçon. Ce tube de guidage est amovible, de préférence ; il est emboîté dans le ratelier 17.

On a fait apparaître également, en coupe, le bac 24, de stockage des appâts boëttés. On distingue les couches successives d'appâts séparées par les volets 25 ; les volets 25 sont guidés par des rainures latérales 26 ; ils sont mobiles et amovibles.

On a également fait apparaître sur la figure 3, des roulettes de transport 29, escamotables ; ces roulettes 29 sont montées sur des bras 30 articulés sur un axe 31 sous le coffre 11. Comme représenté, le bras 30 est coudé pour permettre par simple pivotement autour de l'axe 31, de positionner la roulette 29 soit en position inactive, devant la caisse 1, soit en position active sous ladite caisse.

La figure 4 représente une vue partielle, de face, de la caisse sans la rampe 14 ni le tube de guidage des hameçons 16. On distingue le coffre 11 se prolongeant latéralement par le côté 12 formant ainsi l'ouverture frontale 13 par laquelle passe la ligne maîtresse 1.

On a esquissé sur cette figure 4, le contour de la rampe 14 en traits mixtes fins de façon à faire apparaître le niveau 27 de cette rampe, qui part de la bordure supérieure 32 du coffre 11 et le niveau 28 qui part de l'extrémité du tube le plus bas dans lequel sont logés, sur la figure 4, des lests 4. On remarque que les tubes 20, 21 sont disposés latéralement sur la caisse, et que les cordeaux respectifs 5 et 6, des lests et des flotteurs, vont à la ligne maîtresse 1 par le devant de la caisse et l'ouverture frontale 13.

Au-dessus des tubes 20, 21 on remarque le bac 24 à appâts. Ce bac 24 est fixé par tout moyen approprié sur le côté 12 à sa partie supérieure. Le ratelier 17 s'étend, longitudinalement, à la partie supérieure du côté 12, fixé en porte-à-faux à son extrémité 18 sur ledit côté 12. Ce ratelier 17 se présente sous la forme d'un profilé dont une section agrandie apparaît dans l'encadré, montrant la position de l'hameçon, et en particulier de son ardillon 33 à l'intérieur d'une chambre 34 et, de la hampe 35 disposée à l'extérieur dudit profilé, au-dessus de la fente 19 aménagée entre le ratelier et le côté 12. La chambre 34 est principalement constituée d'un rail de guidage 36 des hameçons et d'un plafond 37 ; l'espace en forme de rainure longitudinale 38, entre le rail 36 et le plafond 37 est, de préférence, inférieur à deux fois le diamètre des hameçons pour interdire tout chevauchement des hameçons les uns par rapport aux autres. On remarque que la forme de la chambre 34 et de la rainure 38, permet le dégagement de l'ardillon 33, et par là le retrait de l'hameçon 8 du ratelier 17. Le profilé du ratelier 17 a une section sensiblement rectangulaire, s'étendant verticalement, et comporte, en plus de la chambre 34 de logement des ardillons 33 une chambre 45 disposée en-dessous, qui permet, en particulier l'emboîtage du rail de guidage 15 des hameçons lors de l'opération de halage. On remarque encore, figure 4, que l'espace entre le ratelier 17 et la partie supérieure du côté 12 est inférieur à l'encombrement du pied 39 de l'hameçon, de façon à éviter toute chute accidentelle de l'hameçon à l'intérieur de la caisse de stockage.

La figure 5 représente en vue de dessus, une caisse de stockage offrant la possibilité de filer, ou haler, la ligne sur deux côtés opposés. On dispose, de part et d'autre du coffre 11, de la possibilité d'installation d'une rampe de filage 14 ; les appâts boëttés étant disposés dans des bacs 24 latéraux dont l'ouverture 40 se situe du côté de la rampe de filage 14 utilisée.

On a représenté, figures 6 et 7, le détail des moyens permettant de positionner d'une façon sûre et correcte, l'hameçon en amont de l'entrée du ratelier 17. Ces moyens sont positionnés au niveau de la rainure 41 du tube de guidage 15 ; ils consistent essentiellement en une échancrure 42 formant butée à l'hameçon et, agissant simultanément sur ce dernier, en un ergot 43 légèrement incliné dans le sens de l'avancement de l'hameçon et ancré à la partie supérieure du tube 15. Cet ergot 43 provoque un pivotement de l'hameçon 8 et sa mise en place correcte avant enfilage dans la rainure 38 et sur le rail de stockage 36 du ratelier 17. Des moyens complémentaires, en forme de brosse longitudinale 44, à poils saillants, exercent constamment une force verticale qui stabilise l'hameçon. On remarque sur la figure 2, que le rail de guidage 15 de l'hameçon 8, est en forme de tube vrillé, muni à son extrémité, ou entrée, d'une fourchette 16 qui démarre, ou débouche, sur la rainure en torsade 41. Cette dernière aboutit aux moyens de mise en place correcte de l'hameçon, décrit ci-dessus, et au niveau desquels cette dernière s'élargie pour permettre la sortie de la hampe 35 de l'hameçon, de l'intérieur du tube de guidage 15.

## Revendications

1. Caisse de stockage pour lignes palangres pélagiques, en forme de coffre (11), avec au moins une ouverture frontale (13) de halage et de filage de la ligne, laquelle ouverture frontale est située entre deux côtés latéraux (12) de la caisse dont l'un au moins est équipé, à sa bordure supérieure, d'un ratelier (17) muni d'un rail (36) sur lequel sont rangés les hameçons, caractérisée en ce qu'elle comporte des moyens permettant d'éviter toute chute accidentelle des hameçons dans la caisse, lesquels moyens consistent en une fente longitudinale (19) ménagée entre le ratelier et le côté de la caisse équipé dudit ratelier, qui est ouverte du côté de l'ouverture frontale (13) pour permettre le passage des avançons (10) de la ligne, et dont la largeur est inférieure à l'encombrement du pied (39) de l'hameçon (8) monté à l'extrémité dudit avançon.

2. Caisse de stockage pour lignes palangres, selon la revendication 1, caractérisée en ce que le ratelier (17) est fixé en porte-à-faux à partir de son extrémité arrière (18).

3. Caisse de stockage pour lignes palangres pélagiques, selon la revendication 2, caractérisée en ce que le ratelier (17) est un profilé comportant une rainure (38) longitudinale, entre le rail support (36) et le plafond (37) dudit profilé ; la hauteur de ladite rainure (38) est inférieure à deux fois le diamètre des hameçons (8) et la chambre (34) de logement de l'ardillon (33) est telle qu'elle permet le dégagement de l'hameçon, du ratelier (17), en vue de l'opération de boëttage.

4. Caisse de stockage pour lignes palangres pélagiques, selon l'une quelconque des revendications 1 à 3, caractérisée en ce qu'elle comporte, sur au moins un côté, des structures en forme de tubes (20, 21) servant au logement et au rangement des lests (4) et flotteurs (7).

5. Caisse de stockage pour lignes palangres pélagiques, selon la revendication 4, caractérisée en ce que les tubes (20, 21) comportent une fente longitudinale (23) orientée vers le côté (12), pour le passage des cordeaux (5 et 6), des lests (4) et des flotteurs (7) respectivement ; ces tubes (20, 21) sont inclinés vers l'arrière pour immobiliser automatiquement par gravité lesdits lests (4) et flotteurs (7).

6. Caisse de stockage pour lignes palangres pélagiques, selon l'une quelconque des revendications 1 à 5, caractérisée en ce qu'elle comporte, sur un côté, en vis à vis du ratelier (17), au moins un bac (24) de stockage d'appâts (9) boëttés.

7. Caisse de stockage pour lignes palangres pélagiques, selon la revendication 6, caractérisée en ce que le bac (24) comporte des volets mobiles (25) de séparation des différentes couches d'appâts (9) ; ces volets (25) étant maintenus solidaires dudit bac (24) au moyen de rainures de guidage (26) coopérant avec des formes appropriées sur lesdits volets (25).

8. Caisse de stockage pour lignes palangres pélagiques, selon l'une quelconque des revendications 1 à 7, caractérisée en ce que le ratelier (17) est précédé par un rail de guidage (15), en forme de tube vrillé muni à son entrée d'une fourchette (16) qui débouche sur une rainure (41) en torsade, laquelle rainure positionne l'hameçon en extérieur et aboutit, avant le ratelier, à un butoir (42) et un ergot (43) qui l'éjectent dans une position préférentielle de façon à l'engager dans ledit ratelier (17).

9. Caisse de stockage pour lignes palangres pélagiques, selon l'une quelconque des revendications 1 à 8, caractérisée en ce qu'elle comporte une rampe de guidage (14) ancrée sur la face frontale de la caisse et munie de deux niveaux, un niveau (27) constituant la goulotte de sortie de la ligne maîtresse (1) et un niveau (28) constituant la goulotte de sortie et d'accompagnement des flotteurs (7), des lests (4) et des appâts (9).

10. Procédé de préparation de lignes type palangres pélagiques, stockées dans une caisse selon la revendication 9, caractérisé en ce qu'il consiste, après halage de la ligne et rangement des hameçons (8) dans le ratelier (17) d'une part, des flotteurs (7) et lests (4) dans leurs logements respectifs (20, 21) d'autre part, à sortir chaque hameçon (8) dudit ratelier (17), à le boëtter, et à le positionner après boëttage par couches successives séparées, dans un bac de stockage (24) disposé à proximité dudit ratelier.

## Ansprüche

1. Behälter zum Aufbewahren von Langleinen in Form eines Kastens (11), mit mindestens einer Vorderöffnung (13) für das Hochziehen und das Inswasserbringen der Leine, wobei die Vorderöffnung zwischen zwei Seitenfeldern (12) des Kastens angeordnet ist, deren eines an seinem oberen Rand mindestens mit einem Ständer (17) mit einer Schiene (36) ausgestattet ist, auf der Angelhaken angeordnet sind, dadurch gekennzeichnet, daß der Behälter Mittel aufweist, die jeden möglichen Fall der Angelhaken in den Behälter zu vermeiden erlauben, wobei diese Mittel aus einem Längsschlitz (19) bestehen, der zwischen dem Ständer und dem Feld des mit diesem Ständer ausgestatteten Behälters angeordnet ist und der auf der Seite der Vorderöffnung (13) offen ist, um den Durchgang von Reißteilverbindern (10) der Leine zu gestatten, und dessen Breite kleiner ist als der Raumbedarf des Fußes (39) des Angelhakens (8), der am Ende dieses Reißteilverbinders angebracht ist.

2. Behälter zum Aufbewahren von Langleinen nach Anspruch 1, dadurch gekennzeichnet, daß der Ständer (17) von seinem rückseitigen Ende (18) freitragend befestigt ist.

3. Behälter zum Aufbewahren von Langleinen nach Anspruch 2, dadurch gekennzeichnet, daß der Ständer (17) ein Profil ist mit einer Längsrille (38) zwischen der Schienenhalterung (36) und der Decke (37) dieses Profils ; wobei die Höhe dieser Rille (38) kleiner als der zweifache Durchmesser der Angelhaken (8) ist und die Aufnahmekammer (34) für den Dorn (33) derart ist, daß sie erlaubt, daß der Angelhaken und der Ständer (17) außer Eingriff kommen im Hinblick auf das Anbringen des Köders an den Angelhaken.

4. Behälter zum Aufbewahren von Langleinen nach einem der Ansprüche 1 bis 3, dadurch gekennzeichnet, daß er auf mindestens einem Feld Aufbauten in Form von Rohren (20, 21) aufweist, die der Aufnahme und Anordnung von Haltegewichten (4) und Schwimmkörpern (7) dienen.

5. Behälter zum Aufbewahren von Langleinen nach Anspruch 4, dadurch gekennzeichnet, daß die Rohre (20, 21) einen zu dem Feld (12) gerichteten Längsschlitz (23) aufweisen für den Durchgang von Resistentschnüren (5 und 6), Haltegewichten (4) bzw. Schwimmkörpern (7) ; wobei diese Rohre (20, 21) nach hinten geneigt sind, um automatisch durch Schwerkraft die Haltegewichte (4) und Schwimmkörper (7) festzuhalten.

6. Behälter zum Aufbewahren von Langleinen nach einem der Ansprüche 1 bis 5, dadurch gekennzeichnet, daß er auf einem Feld gegenüber dem Ständer (17) mindestens einen Speicherbehälter (24) für die an den Angelhaken angebrachten Köder (9) aufweist.

7. Behälter zum Aufbewahren von Langleinen nach Anspruch 6, dadurch gekennzeichnet, daß der Behälter (24) bewegliche Klappen (25) für die Trennung der verschiedenen Köderschichten (9) aufweist; wobei diese Klappen (25) formschlüssig mit diesem Behälter (24) mittels Führungsrillen (26) gehalten sind, die mit geeigneten Formen an den Klappen (25) zusammenarbeiten.

8. Behälter zum Aufbewahren von Langleinen nach einem der Ansprüche 1 bis 7, dadurch gekennzeichnet, daß der Ständer (17) durch eine Führungsschiene (15) in Form eines hohlsträngigen Rohres überragt ist, welches an seinem Eingang mit einer Gabel (16) versehen ist, die an einer Rille (41) mit Verwindung mündet, wobei diese Rille den Angelhaken nach außen positioniert und vor dem Ständer an einem Puffer (42) und einem Nocken (43) anstößt, der ihn in eine bevorzugte Lage ausstößt, um ihn in dem Ständer (17) in Eingriff zu bringen.

9. Behälter zum Aufbewahren von Langleinen nach einem der Ansprüche 1 bis 8, dadurch gekennzeichnet, daß er eine Führungsrampe (14) aufweist, die auf der Vorderseite des Behälters verankert und mit zwei Niveaus ausgestattet ist, einem Niveau (27), welches die Ausgangsrutsche der Hauptleine (1) bildet, und einem Niveau (28), welches die Rutsche für den Ausgang und das Zubehör für die Schwimmkörper (7), die Haltegewichte (4) und die Köder (9) bildet.

10. Verfahren zum Vorbereiten von Langleinen, die in einem Behälter nach Anspruch 9 gelagert sind, dadurch gekennzeichnet, daß es nach dem Hochziehen der Leine und Anordnen der Angelhaken (8) in dem Ständer (17) einerseits, der Schwimmkörper (7) und Haltegewichte (4) in ihren entsprechenden Aufnahmen (20, 21) andererseits, aus dem Herauskommen jedes Angelhakens (8) aus dem Ständer (17), ihn mit dem Köder Versehen und ihn nach dem Versehen mit dem Köder Positionieren in getrennte aufeinanderfolgende Schichten in einem Speicherbehälter (24), der neben dem Ständer angeordnet ist, besteht.

## Claims

1. Receptacle for storing trot-lines, in the form of a box (11), with at least one frontal opening (13) for hauling in and for paying out the line, which frontal opening is provided between two lateral sides (12) of the receptacle, at least one of which is equipped, at its upper edge, with a rack (17) provided with a rail (36) on which the hooks are arranged, characterized in that it comprises means which allow to avoid any accidental falling of the hooks into the receptacle, which means consist of a longitudinal slot (19) arranged between the rack and the side of the receptacle which is equipped with said rack, which is open on the side of the frontal opening (13) in order to allow the passage of the snoods (10) of the line, and the width of which is smaller than the bulk of the foot (39) of the hook (8) mounted at the end of said snood.

2. Receptacle for storing trot-lines according to Claim 1, characterized in that the rack (17) is in cantilever from its rear end (18).

3. Receptacle for storing trot-lines according to Claim 2, characterized in that the rack (17) is a section comprising a longitudinal groove (38) between the support rail (36) and the top (37) of said section, the height of said groove (38) being smaller than two times the diameter of the hooks (8) and the chamber (34) for housing the barb (33) being such that it allows the release of the hook, from the rack (17), for the purpose of the operation of baiting.

4. Receptacle for storing trot-lines according to any one of Claims 1 to 3, characterized in that it comprises, on at least one side, structures in the form of tubes (20, 21) which serve for the housing and arrangement of the sinkers (4) and floats (7).

5. Receptacle for storing trot-lines according to Claim 4, characterized in that the tubes (20, 21) comprise a longitudinal slot (23) oriented towards the side (12) for the passage of the cords (5 and 6), of the sinkers (4) and floats (7) respectively, these tubes (20, 21) being inclined towards the rear in order to immobilize automatically by gravity said sinkers (4) and floats (7).

6. Receptacle for storing trot-lines according to any one of Claims 1 to 5, characterized in that it comprises, on one side, opposite the rack (17), at least one container (24) for storing baited lures (9).

7. Receptacle for storing trot-lines according to Claim 6, characterized in that the container (24) comprises movable flaps (25) for separation of the different layers of lures (9), said flaps (25) being kept integral with said container (24) by means of guide grooves (26) which interact with appropriate shapes on said flaps (25).

8. Receptacle for storing trot-lines according to any one of Claims 1 to 7, characterized in that the rack (17) is preceded by a guide rail (15), in the form of a twisted tube provided at its entrance with a fork (16) which opens into a twisted groove (41), which groove positions the hook outside and ends, before the rack, in a stop (42) and a lug (43) which eject it in a preferential position so as to engage it in said rack (17).

9. Receptacle for storing trot-lines according to any one of Claims 1 to 8, characterized in that it comprises a guide ramp (14) anchored on the front face of the receptacle and provided with two levels, one level (27) constituting the exit chute of the main line (1) and one level (28) constituting the exit and accompaniment chute of the floats (7), of the sinkers (4) and of the lures (9).

10. Process of preparation of trot-lines, stored in a receptacle according to Claim 9, characterized in that it consists, after hauling in of the line and arrangement of the hooks (8) in the rack (17) on the one hand, of the floats (7) and the sinkers (4) in their respective housings (20, 21) on the other hand, in taking each hook (8) out of said rack (17), in baiting it and in positioning it after baiting in separate successive layers in a storage container (24) arranged close to said rack.

_fig.2_

_fig.1_

_fig.3_

_fig.4_

_fig.5_

_fig.6_

_fig.7_